# EUROPÄISCHE PATENTSCHRIFT

(11) **EP 1 558 667 B1**
(45) Veröffentlichungstag und Bekanntmachung des Hinweises auf die Patenterteilung: **27.09.2006**
(21) Anmeldenummer: 03809329.0
(22) Anmeldetag: 24.10.2003
(51) Int. Cl.: C08G 65/00

(54) **ÜBERGANGSMETALL-VERBRÜCKTE POLYMERE**
POLYMERS BRIDGED BY A TRANSITION METAL
POLYMERES PONTES PAR DES METAUX DE TRANSITION

(30) Priorität: 28.10.2002 DE 10250274
(43) Veröffentlichungstag der Anmeldung: 03.08.2005
(73) Patentinhaber: BASF Aktiengesellschaft, 67056 Ludwigshafen (DE)
(72) Erfinder: NÖRENBERG, Ralf, 55218 Ingelheim (DE); WAGNER, Norbert, 67112 Mutterstadt (DE); FERNANDEZ GONZALEZ, Monica, 69121 Heidelberg (DE); SCHUBERT, Ulrich, 85737 Ismaning (DE); SCHMATLOCH, Stefan, NL-5611 Eindhoven (NL)
(74) Vertreter: Isenbruck, Günter
(86) Internationale Anmeldenummer: PCT/EP2003/011852
(87) Internationale Veröffentlichungsnummer: WO 2004/037897

(56) Entgegenhaltungen:
- WO-A-94/28060
- SCHUBERT ET AL.: "Approach towards high molecular mass polymers via metal complexing oligomers" POLYMER PREPRINTS, Bd. 42, Nr. 2, 2001, Seiten 395-396, XP009025723 in der Anmeldung erwähnt
- SCHUBERT ET AL.: "Functional (Block) Copolymers with metal complexing segments" POLYMER PREPRINTS, Bd. 41, Nr. 1, 2000, Seiten 542-543, XP009025724 in der Anmeldung erwähnt
- SCHUBERT ET AL: "Functionalized polymers with metal complexing segments: a simple and high-yield entry towards 2,2 : 6 ,2 -terpyridine-based oligomers" MACROMOL. RAPID COMMUN., Bd. 21, Nr. 16, 2000, Seiten 1156-1161, XP002269861
- SCHUBERT ET AL: "Makromoleküle mit Bipyridin- und Terpyridinkomplexen als Verknüpfungsstellen: erste Schritte auf dem Weg zu metallo-supramolekularen Polymeren" ANGEW. CHEM., Bd. 114, 16. August 2002 (2002-08-16), Seiten 3017-3050, XP002269862
- SHAY G D: "ALKALI-SWELLABLE AND ALKALI-SOLUBLE THICKENER TECHNOLOGY A REVIEW" ADVANCES IN CHEMISTRY SERIES, AMERICAN CHEMICAL SOCIETY, WASHINGTON, DC, US, Bd. 223, 1989, Seiten 457-494, XP008001247 ISSN: 0065-2393

## Beschreibung

Die Erfindung betrifft Polymere aus Übergangsmetall-verbrückten Einheiten, Verfahren zu ihrer Herstellung und ihre Verwendung zur Viskositätserhöhung von Flüssigkeiten, die mit einer gleichzeitigen Farbgebung für die Flüssigkeit verbunden sein kann. Die Erfindung betrifft auch die Verwendung der Polymere als schaltbare Gelbildner oder Hydrogele.

Für viele Anwendungen wie Shampoos oder Duschgele in der Kosmetikindustrie, Sprühreiniger oder Weichspüler in der Wasch- und Reinigungsmittelindustrie oder Lacke und Farben in der Beschichtungsindustrie sind hochviskose Lösungen sehr interessante Systeme. Es ist wünschenswert, eine hohe Viskosität in den Lösungen mit einer möglichst geringen Menge an Verdickern oder Hydrogelen zu erreichen. Derzeit wird häufig Polyacrylsäure als Verdicker eingesetzt. Häufig muss allerdings aufgrund der schlechten Verträglichkeit mit anionischen Tensiden auf aufwendige und kostspielige Biopolymere wie Alginate, Xanthane oder auf hochmolekulare nicht-ionische Polymere wie Polyvinylpyrrolidon oder Polyethylenoxid zurückgegriffen werden. Häufig werden Viskositäten von etwa 1.000 mPas bei einer Konzentration von weniger als 1% des Polymers in Wasser erreicht. Zur Färbung der Gele ist der Zusatz eines Farbstoffs notwendig, und die Viskosität kann nur durch eine Verdünnung moduliert werden.

Alternativ dazu werden hydrophob modifizierte, kürzerkettige Polymere als assoziierende Verdicker eingesetzt, die durch Bildung eines Netzwerks, gegebenenfalls zusammen mit Tensiden, eine Strukturviskosität aufbauen können. Auch solche Formulierungen sind nicht einfach zu verändern und anzupassen, da fast jeder Formulierungsbestandteil die Effizienz der Netzwerkbildung beeinflusst. Auch Öle und Lösungsmittel können durch die Bildung eines Wasserstoffbrückennetzwerkes in ihrer Viskosität verändert werden.

In Polymer Preprints 2000, 41 (1), Seiten 542 bis 543 werden funktionelle (Block)-copolymere mit metallischen Komplexierungs-Segmenten beschrieben. Es handelt sich um Bis-terpyridin-terminierte Polyethylenoxide, die mit Hilfe von Übergangsmetall-Ionen verbrückt und damit polymerisiert werden können. Polymer Preprints 2001, 42 (2), Seiten 395 bis 396 betrifft ähnliche Polymersysteme. Die Änderung der Viskosität beim allmählichen Zusatz von Metallionen wird beschrieben. Mit der langsamen Zugabe eines Metallsalzes fand eine Steigerung der Viskosität statt. Die mit diesem Verfahren erreichbaren Viskositätswerte sind jedoch sehr niedrig und betragen weniger als 40 mPas bei einer 4%-igen Lösung des Polymers in Wasser. Die nach dem Verfahren erhaltenen Polymere erreichen ein zu niedriges Molekulargewicht und sind damit nicht als Verdicker einsetzbar.

Aufgabe der vorliegenden Erfindung ist die Bereitstellung von Polymeren aus Übergangsmetall-verbrückten Einheiten, die ein höheres Molekulargewicht aufweisen und damit Viskositätswerte zeigen, die sie für eine Anwendung als Verdicker geeignet machen.

Die Aufgabe wird erfindungsgemäß gelöst durch ein Polymer aus Übergangsmetall-verbrückten Einheiten der allgemeinen Formel (I) 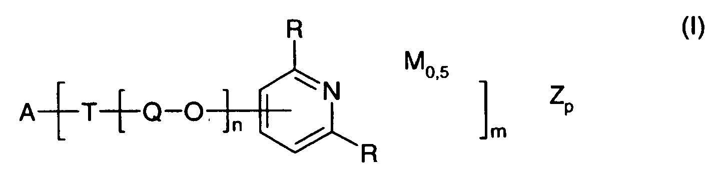 mit der Bedeutung
- A: m-wertiger organischer Rest,
- T: unabhängig voneinander O oder NH,
- Q: unabhängig voneinander CHR¹-CH₂ mit R¹ H oder gegebenenfalls substituiertes C₁₋₆-Alkyl,
- R: unabhängig voneinander H, 2-Pyridyl, 2-Imidazolinyl, 2-Imidazolyl, 2-Thiazolinyl, 2-Thiazolyl, 2-Pyridazyl, 2-Pyrimidyl, Carboxy, Carbonsäureesterrest, Carbonsäureamidrest, Carboxylat, Phosphonat, wobei mindestens einer der Reste R von H verschieden ist,
- M: Fe²⁺, Fe³⁺, Co²⁺, Co³⁺, Zn²⁺, Ru²⁺, OS²⁺, Ni²⁺,
- Z: SO₄²⁻, CH₃OO⁻, BF₄⁻, SF₆⁻, Cl⁻, I⁻, PF₆⁻, Perchlorat,
- n: 1 bis 10.000,
- m: 2 bis 100,
- p: Zahl, die dem Ladungsausgleich im Polymer entspricht,
wobei das mittlere Molekulargewicht (Zahlenmittel) des Polymers mindestens 200 000 beträgt.

Die Viskosität einer 10 Gew.-%-igen wässrigen Lösung des Polymers beträgt mehr als 1.000 mPas, während die gemäß Polymer Preprints 2000, 41 (1), 542 und Polymer Preprints 2001, 42 (2), 395 erhaltenen Polymere in 10 Gew.-%-iger wässriger Lösung nur Viskositäten von etwa 150 mPas aufweisen. Die relative Viskosität für die erfindungsgemäßen Polymere ist mehr als 3mal so groß wie die relative Viskosität für die Polymere gemäß der zitierten Literaturstellen, jeweils bestimmt in 1 Gew.-%-iger *wässriger Lösung.

Die Herstellung der erfindungsgemäßen Polymere mit hohem Molekulargewicht ist durch schnelle Zugabe des Metallsalzes zu einer vorzugsweise stark gerührten Lösung der Polymervorläufer ohne Metallsalz möglich. Im Labormaßstab entspricht dies der Rührleistung eines Magnetrührers. Die Erfindung betrifft damit auch ein Verfahren zur Herstellung der vorstehenden Polymere, bei dem nicht Übergangsmetall-verbrückte Einheiten der allgemeinen Formel (I), deren Ladung durch Gegen-Ionen Z ausgeglichen ist, in einem Lösungsmittel vorgelegt und sodann mit Salzen der Metalle M unter Mischen umgesetzt werden, wobei die Zugabegeschwindigkeit der Metallsalze mindestens 1 mol/s beträgt. Vorzugsweise beträgt die Zugabegeschwindigkeit mindestens 2 mol/s, besonders bevorzugt mindestens 5 mol/s.

Dabei beträgt die Konzentration der Einheiten der allgemeinen Formel (I) im Lösungsmittel vor der Umsetzung mit den Metallsalzen vorzugsweise mindestens 3 Gew.-%, besonders bevorzugt mindestens 5 Gew.-%, bezogen auf die gesamte Lösung.

Während gemäß des Standes der Technik die Metallsalzlösung zur Lösung der unverbrückten Einheiten zugetropft wird, wird erfindungsgemäß die Metallsalzlösung schnell zugegeben, oder die Lösung und die Metallsalze werden direkt miteinander vermischt und umgesetzt.

Das erfindungsgemäße Herstellungsverfahren führt zu Polymeren mit einem höheren Molekulargewicht, wodurch brauchbare Verdickungseigenschaften erzielt werden. Zusätzlich kann die Farbe der Polymere durch die Zugabe unterschiedlicher Metallsalze moduliert werden. Durch Zusatz von Zink-Ionen werden farblose Systeme erhalten, durch Zusatz von Kobalt-Ionen rote Systeme, durch Zusatz von Eisen-Ionen violette Systeme und durch Zusatz von Ruthenium-Ionen orange Systeme. Weiterhin haben nach dem erfindungsgemäßen Verfahren hergestellte Hydrogele den Vorteil, dass sie schaltbar sind. Starke Komplexbildner, die eine stärkere Komplexbildung als die Einheiten der allgemeinen Formel (I) bewirken, können die Polymere zerstören, da sie das Metall aus dem Komplex entfernen können. Durch Redoxreaktionen, d.h. durch Zugabe von Oxidations- oder Reduktionsmitteln, ist derselbe Effekt erreichbar, da die Metalle nur in bestimmten Oxidationszuständen Polymere bilden. Beispielsweise bildet Eisen(II) Polymere, nicht jedoch Eisen (0) und Eisen (III).

Ohne an eine Theorie gebunden zu sein, ist es möglich, dass durch die Verwendung von höheren Telechel-Konzentrationen bei der Synthese und einer beschleunigten Zugabe des Metall-Salzes verstärkt eine Bevorzugung einer intermolekularen gegenüber einer intramolekularen Komplexierung erzielt werden kann. Damit ist die Entstehung linearer Koordinationspolymere verbunden.

Die erfindungsgemäß verbrückten Einheiten der allgemeinen Formel (I) können bifunktional oder multifunktional sein. Entsprechend kann m einen Wert von 2 bis 100, vorzugsweise 2 bis 10, besonders bevorzugt 2 bis 5, insbesondere 2 oder 3 aufweisen. Der Index m gibt gerade an, wieviele zur Komplexierung geeignete Zentren pro Einheit der allgemeinen Formel (I) zur Verfügung stehen. Die Einheiten der allgemeinen Formel (I) weisen endständige substituierte Pyridyl-Gruppen auf, die mit den genannten Metallen Komplexbildungen eingehen. Die beiden Substituenten R an den endständigen Pyridyl-Gruppen können unabhängig voneinander die angegebene Bedeutung haben. R bedeutet unabhängig voneinander H, 2-Pyridyl, 2-Imidazolinyl, 2-Imidazolyl, 2-Thiazolinyl, 2 Thiazolyl, 2-Pyridaryl, 2-Pyrimidyl, Carboxy, Carbonsäureesterrest, vorzugsweise von C₁₋₁₂-Alkanolen, Carbonsäureamidrest, vorzugsweise von Ammoniak oder primären Aminen, Carboxylat, Phosphonat, wobei mindestens einer der Reste R von H verschieden ist. Bevorzugt sind die Bedeutungen H, 2-Pyridyl, 2-Imidazolinyl, 2-Imidazolyl, 2-Thiazolinyl, 2-Thiazolyl.

Vorzugsweise handelt es sich bei einem oder beiden der Reste R in jeder terminalen Struktur um 2-Pyridyl-Reste. Besonders bevorzugt liegen endständig Terpyridin-Gruppen vor.

Die endständigen substituierten Pyridyl-Gruppen sind über Einheiten -T-[Q-O-]ₙ mit einem organischen Rest A verbunden. Der organische Rest A ist dabei m-wertig, so dass er m der substiuierten Pyridyl-Strukturen trägt. Der Rest A kann sich vorzugsweise von Polyolen, Polyaminen, Polyalkanolaminen, Polyethylenimin, Polyvinylamin und Alkoxylaten davon ableiten. Beispielsweise kann sich der organische Rest A von Alkoholen, Aminen, Estern, Amiden wie Methyldiethanolamin, Triethanolamin, Tetraethanolethylendiamin, Ethylendiamin, Diethylentriamin, Triethylentetramin, Tetraethylenpentamin, Polyethylenimin, Glycerin, Pentaerythritol, Trimethylolpropan, Kohlenhydraten, Sorbitolethoxylaten (Sorbitan), Polyvinylalkohol, partial hydrolisierten Polyvinylacetaten, Monohydroxy-, Dihydroxy-, Trihydroxy-, Tetrahydroxy-, Pentahydroxy- oder Hexahydroxy-Benzolen ableiten.

Q bedeutet unabhängig voneinander CHR¹-CH₂ mit R¹ H oder gegebenenfalls substituiertes C₁₋₆-Alkyl. Bei Q handelt es sich vorzugsweise um von Ethylenoxid, Propylenoxid, Butylenoxid, Pentylenoxid oder Gemischen davon abgeleitete Reste. Besonders bevorzugt sind die Reste Q von Ethylenoxid oder Propylenoxid, insbesondere von Ethylenoxid abgeleitet. Sofern unterschiedliche Einheiten Q-O vorliegen, kann es sich um statistische Copolymere, Blockcopolymere oder alternierende Copolymere handeln. Besonders bevorzugt handelt es sich um reine oder gemischte von Ethylenoxid und/oder Propylenoxid abgeleitete Einheiten.

Zusammen mit den Resten A und T ergibt sich vorzugsweise eine Struktur, bei der es sich um überwiegende oder ausschließliche Alkoxylate handelt. Beispiele geeigneter Alkoxylate sind Polyethylenoxid, Polypropylenoxid, Polybutylenoxid, Poly THF usw.. Geeignete Marken der BASF AG sind beispielsweise Lutensol®, Plurafac®, Plurionic®, Pluriol®, Lutron®.

Der Alkoxylierungsgrad n beträgt 1 bis 10.000, vorzugsweise 1 bis 1.000, insbesondere 1 bis 500.

Je nach Art der in den Übergangsmetall-verbrückten Einheiten vorliegenden Metallionen, sind zur Neutralisierung Anionen Z notwendig. Diese liegen in einer Zahl vor, die dem Ladungsausgleich im Polymer entspricht.

Besonders bevorzugt liegen in den Einheiten der allgemeinen Formel (I), abgesehen von den terminalen substituierten Pyridyl-Gruppen, nur polymerisierte Alkylenoxid-Einheiten, insbesondere Ethylenoxid-Einheiten vor. Bei den endständigen substituierten Pyridyl-Gruppen handelt es sich insbesondere um mit 2-Pyridyl-Gruppen substituierte 4-Pyridyl-Gruppen. Die Strukturen entsprechen dabei den in den Zitaten von Polymer Preprints angegebenen Strukturen. Insbesondere handelt es sich um Bis(2, 2':6', 2"-terpyrid-4'-yl) FeCl₂ poly(ethylenoxid), wobei 10 bis 200, insbesondere beispielsweise 180 Ethylenoxid-Einheiten im Molekül vorliegen.

Bei der erfindungsgemäßen Herstellung der Polymere wird in einem Lösungsmittel gearbeitet, das sowohl die endständigen substituierten Pyridyl-Gruppen als auch die verbindenden Gruppen löst. Beispielsweise wird CHCl₃ als Lösungsmittel eingesetzt, da es den Terpyridin-Anteil und den Polyethylenglykol-Anteil in den bevorzugten Einheiten der allgemeinen Formel (I) löst.

Die Polymere können erfindungsgemäß zur Viskositätserhöhung von Flüssigkeiten, insbesondere wässrigen oder alkoholischen Flüssigkeiten, speziell Wasser oder Alkoholen, eingesetzt werden. Sie können dabei zur gleichzeitigen Farbgebung für die Flüssigkeit dienen. Auf die Anwendungsgebiete für derartige Viskositäts-modifizierte Flüssigkeiten wurde bereits eingangs eingegangen.

Die Erfindung betrifft auch die Verwendung der Polymere als schaltbare Gelbildner (Hydrogele), in denen durch Zusatz von Komplexbildnern für die Metalle M die Viskosität gesteuert werden kann. Derartige starke Komplexbildner werden beispielsweise von der BASF AG unter den Triol®-Marken vertrieben.

In einem derartigen schaltbaren Gel, insbesondere Hydrogel, kann die Viskosität gesteuert werden. Die Einstellung der Viskosität erfolgt zunächst durch Zusatz einer geeigneten Menge des Polymers. Der Abbruch der Viskosität erfolgt durch Zusatz des stärkeren Komplexbildners (Ligand mit höherer Affinität für die Metallionen).

Die Erfindung wird nachfolgend anhand eines Beispiels näher erläutert.

### Beispiel

Die Ausgangsstoffe können wie in Polymer Preprints 2000, 41 (1), 542 bis 543 bzw. Polymer Preprints 2001, 42 (2), 395 bis 396 beschrieben hergestellt werden.

### Bis(2,2':6,2"-terpyrid-4'-yl) FeCl₂ poly(ethylenoxid)₁₈₀ (7):

300 mg (32.97 µmol) Bis(2,2':6',2"-terpyrid-4'-yl) poly(ethylenoxid)₁₈₀ und 4.17 mg (32.97 µmol) FeCl₂ werden in 10 ml CHCl₃ vorgelegt und 14 h bei Raumtemperatur gerührt. Nach Zugabe einiger Tropfen MeOH wird zum Rückfluss erhitzt und weitere 28 h gerührt. Nach Abziehen des Lösungsmittels wird der Rückstand mehrmals mit Diethylether gewaschen. Das Produkt wird als violetter Feststoff isoliert. Ausbeute: 280 mg, (92%); ¹H-NMR (400 MHz, CDCl₃): δ = 3.63 (m, 1150H, H-PEO), 4.18 (m, 4H, H-PEO), 5.82 (m, 4H, H-PEO), 7.02-7.90 (m, 8H, H-5,5", H-6,6"), 9.12-9.23 (m, 8H, H-3,3", H-3',5'); UV-Vis (CH₃OH): λₘₐₓ/nm (ε [10⁴ Lmol⁻¹cm⁻¹)] = 244 (4.39), 275 (5.25), 319 (3.66), 559 (1.10); UV-Vis (CH₃OH): λmax/nm (ε [10⁴ Lmol⁻¹cm⁻¹)] = 245 (4.41), 274 (5.07), 559 (0.97); MS (MALDI-TOF, dithranol): [bis(2,2':6',2"-terpyrid-4'-yl) FeCl poly(ethylene oxide)₁₈₀]⁺, 2x[bis(2,2':6',2"-terpyrid-4'-yl) FeCl poly(ethylene oxide)₁₈₀]⁺, 3x[bis(2,2':6',2"-terpyrid-4'-yl) FeCl poly(ethylene oxide)_{180]}⁺, 4x[bis(2,2':6',2"-terpyrid-4'-yl) FeCl poly(ethylene oxide)₁₈₀]⁺, 5x[bis(2,2':6',2"-terpyrid-4'-yl) FeCl poly(ethylene oxide)₁₈₀]⁺, 6x[bis(2,2':6'2"-terpyrid-4'-yl) FeCl poly(ethylene oxide)₁₈₀]⁺.

Durch die Verwendung von höheren Telechel-Konzentrationen bei der Synthese und einer beschleunigten Zugabe des Metall-Salzes wurde verstärkt eine Bevorzugung einer intermolekularen gegenüber einer intramolekularen Komplexierung erzielt. Die damit verbundene Entstehung linearer Koordinationspolymere wurde anhand der Verbreiterung der (2,2':6'2")-Terpyridin-Signale in den ¹H-NMR-Spektren wie auch durch den Nachweis höherer Massenfragmente mittels MALDI-TOF-MS-Spektrometrie nachgewiesen. In den Massenspektren konnte Signale u.a. im Bereich von etwa 20.000, etwa 30.000, etwa 38.000, etwa 48.000 und etwa 57.000 m/z beobachtet werden. Durch die Variation des Herstellungsverfahrens konnten die relativen Viskositäten in 1%-igen wässrigen Lösungen von ursprünglich etwa 4 auf etwa 13 erhöht werden. 10%-ige wässrige Lösungen des Koordinationspolymers bildeten Hydrogele von honigartiger Konsistenz. Die Viskositäten lagen in Bereichen von einigen 1.000 mPas. Die modifizierten Oligoethylenglykole bilden hochviskose Metallo-Supramolekulare-Koordinationspolymere mit filmbildenden Eigenschaften.

## Patentansprüche

1. Polymer aus Übergangsmetall-verbrückten Einheiten der allgemeinen Formel (I) 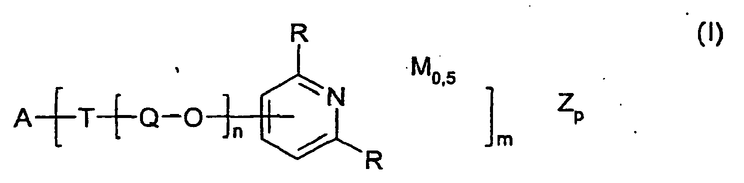 mit der Bedeutung
A m-wertiger organischer Rest,
T unabhängig voneinander O oder NH,
Q unabhängig voneinander CHR¹-CH₂ mit R¹ H oder gegebenenfalls substituiertes C₁₋₆-Alkyl,
R unabhängig voneinander H, 2-Pyridyl, 2-Imidazolinyl, 2-Imidazolyl, 2-Thiazolinyl, 2-Thiazolyl, 2-Pyridazyl, 2-Pyrimidyl, Carboxy, Carbonsäureesterrest, Carbonsäureamidrest, Carboxylat, Phosphonat, wobei mindestens einer der Reste R von H verschieden ist,
M Fe²⁺, Fe³⁺, Co²⁺, Co³⁺, Zn²⁺, Ru²⁺, Os²⁺, Ni²⁺,
Z SO₄²⁻, CH₃OO⁻, BF₄⁻, SF₆⁻, Cl⁻, I⁻, PF₆⁻, Perchlorat,
n 1 bis 10.000,
m 2 bis 100,
p Zahl, die dem Ladungsausgleich im Polymer entspricht,
wobei das mittlere Molekulargewicht (Zahlenmittel) des Polymers mindestens 200.000 beträgt.

2. Polymer nach Anspruch 1, **dadurch gekennzeichnet, dass** A sich ableitet von Polyolen, Polyaminen, Polyalkanolaminen, Polyethyleniminen, Polyvinylamin und Alkoxylaten davon.

3. Polymer nach Anspruch 1 oder 2, **dadurch gekennzeichnet, dass** R jeweils 2-Pyridyl bedeutet.

4. Polymer nach einem der Ansprüche 1 bis 3, **dadurch gekennzeichnet, dass** Q CHR¹-CH₂ mit R¹ H oder Methyl bedeutet.

5. Verfahren zur Herstellung von Polymeren nach einem der Ansprüche 1 bis 4, **dadurch gekennzeichnet, dass** nicht Übergangsmetall-verbrückte Einheiten der allgemeinen Formel (I), deren Ladung durch Gegenionen Z ausgeglichen ist, in einem Lösungsmittel vorgelegt und sodann mit Salzen der Metalle M unter Mischen umgesetzt werden, wobei die Zugabegeschwindigkeit der Metallsalze mindestens 1 mol/s beträgt

6. Verfahren nach Anspruch 5, **dadurch gekennzeichnet, dass** die Konzentration der Einheiten der allgemeinen Formel (I) im Lösungsmittel vor der Umsetzung mit den Metallsalzen mindestens 3 Gew.-%, bezogen auf die gesamte Lösung, beträgt.

7. Verwendung von Polymeren nach einem der Ansprüche 1 bis 4 zur Viskositätserhöhung von Flüssigkeiten.

8. Verwendung nach Anspruch 7 zur gleichzeitigen Farbgebung für die Flüssigkeit.

9. Verwendung von Polymeren nach einem der Ansprüche 1 bis 4 als schaltbare Gelbildner, in denen durch Zusatz von Komplexbildnern für die Metalle M die Viskosität gesteuert werden kann.

## Claims

1. A polymer of transition-metal-bridged units of the formula (I) 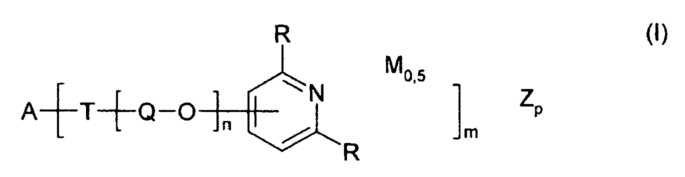 where
A is an m-valent organic radical,
T independently of one another are O or NH,
Q independently of one another are CHR¹-CH₂ where R¹ is H or optionally substituted C₁₋₆-alkyl,
R independently of one another are H, 2-pyridyl, 2-imidazolinyl, 2-imidazolyl, 2-thiazolinyl, 2-thiazolyl, 2-pyridazyl, 2-pyrimidyl, carboxyl, carboxylic ester radical, carboxamide radical, carboxylate, phosphonate, where at least one of the radicals R is different from H,
M is Fe²⁺, F³⁺, Co²⁺, Co³⁺, Zn²⁺, Ru²⁺, Os²⁺, Ni²⁺,
Z is SO₄²⁻, CH₃OO⁻, BF₄⁻, SF₆⁻, Cl⁻, I⁻, PF₆⁻, perchlorate,
n is 1 to 10 000,
m is 2 to 100,
p is a number which corresponds to the charge balance within the polymer,
where the average molecular weight (number average) of the polymer is at least 200 000.

2. The polymer according to claim 1, wherein A is derived from polyols, polyamines, polyalkanolamines, polyethyleneimines, polyvinylamine and alkoxylates thereof.

3. The polymer according to claim 1 or 2, wherein R is in each case 2-pyridyl.

4. The polymer according to any of claims 1 to 3, wherein Q is CHR¹-CH₂ where R¹ is H or methyl.

5. A process for the preparation of a polymer according to any of claims 1 to 4, which comprises introducing non-transition-metal-bridged units of the formula (I), whose charge is balanced by counterions Z, into a solvent, and then reacting them with salts of the metals M with mixing, where the rate of addition of the metal salts is at least 1 mol/s.

6. The process according to claim 5, wherein the concentration of the units of the formula (I) in the solvent prior to the reaction with the metal salts is at least 3% by weight, based on the total solution.

7. The use of a polymer according to one of claims 1 to 4 for increasing the viscosity of liquids.

8. The use according to claim 7 for simultaneously imparting color to the liquid.

9. The use of a polymer according to any of claims 1 to 4 as switchable gelling agents in which the viscosity can be controlled through the addition of complexing agents for the metals M.

## Revendications

1. Polymère à base d'unités pontées par du métal de transition de la formule générale (I) : 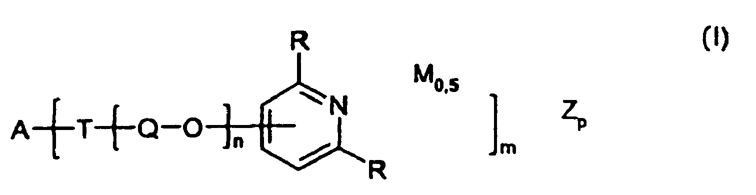 dans laquelle
A représente un radical organique à m valences,
T représentent indépendamment l'un de l'autre O ou NH,
Q représentent indépendamment l'un de l'autre CHR¹-CH₂ où R¹ représente H ou un groupe alkyle en C₁-C₆ éventuellement substitué,
R représentent indépendamment l'un de l'autre H ou un groupe 2-pyridyle, 2-imidazolinyle, 2-imidazolyle, 2-thiazolinyle, 2-thiazolyle, 2-pyridazyle, 2-pyrimidyle, carboxy, ester d'acide carboxylique, amide d'acide carboxylique, carboxylate, phosphonate, au moins un des radicaux R étant différent de H,
M représente Fe²⁺, Fe³⁺, Co²⁺, Co³⁺, Zn²⁺, Ru²⁺, Os²⁺, Ni²⁺,
Z représente SO₄²⁻, CH₃OO⁻, BF₄⁻, SF₆⁻, Cl⁻, I⁻, PF₆⁻, du perchlorate,
n vaut 1 à 10 000,
m vaut 2 à 100,
p est un nombre qui correspond à l'équilibre de charge dans le polymère,
le poids moléculaire moyen (moyenne numérique) du polymère étant d'au moins 200 000.

2. Polymère suivant la revendication 1, **caractérisé en ce que** A dérive de polyols, de polyamines, de polyalcanolamines, de polyéthylèneimines, de polyvinylamines et d'alcoolates de ceux-ci.

3. Polymère suivant la revendication 1 ou 2, **caractérisé en ce que** R représente chaque fois du 2-pyridyle.

4. Polymère suivant l'une des revendications 1 à 3, **caractérisé en ce que** Q représente CHR¹-CH₂ où R¹ représente H ou du méthyle.

5. Procédé de préparation de polymères suivant l'une des revendications 1 à 4, **caractérisé en ce que** des unités non pontées par du métal de transition de la formule générale (I), dont la charge est équilibrée par des contre-ions Z, sont préalablement introduites dans un solvant et ensuite mises à réagir avec des sels des métaux M, tout en mélangeant, la vitesse d'addition des sels métalliques étant d'au moins 1 mole/s.

6. Procédé suivant la revendication 5, **caractérisé en ce que** la concentration des unités de la formule générale (I) dans le solvant avant la réaction avec les sels métalliques est d'au moins 3 % en poids, par rapport à la solution globale.

7. Utilisation de polymères suivant l'une des revendications 1 à 4, pour augmenter la viscosité de liquides.

8. Utilisation suivant la revendication 7, pour colorer simultanément le liquide.

9. Utilisation de polymères suivant l'une des revendications 1 à 4, comme agents gélifiants que l'on peut mettre au point et dans lesquels, par addition de complexants pour les métaux M, la viscosité peut être réglée.
